# EUROPÄISCHE PATENTSCHRIFT

(11) **EP 3 416 512 B1**
(45) Veröffentlichungstag und Bekanntmachung des Hinweises auf die Patenterteilung: **01.06.2022**
(21) Anmeldenummer: 17707213.9
(22) Anmeldetag: 20.02.2017
(51) Int. Cl.: A41D 31/00, A41D 19/00, A41D 19/015, F41H 5/04

(54) **VERBUNDSTRUKTUR FÜR DEN STICHSCHUTZ, VERFAHREN ZUR HERSTELLUNG EINER VERBUNDSTRUKTUR, STICHSCHUTZEINLAGE SOWIE SCHUTZTEXTIL**
STABBING-PROOF COMPOSITE STRUCTURE, METHOD FOR MANUFACTURING A COMPOSITE STRUCTURE, STABBING-PROOF INSERT, AND PROTECTIVE GARMENT
STRUCTURE COMPOSITE POUR UNE PROTECTION ANTI-PERFORATION, PROCÉDÉ DE FABRICATION D'UNE STRUCTURE COMPOSITE, ENTOILAGE DE PROTECTION ANTI-PERFORATION ET TEXTILE PROTECTEUR

(30) Priorität: 18.02.2016 DE 102016202546
(43) Veröffentlichungstag der Anmeldung: 26.12.2018
(73) Patentinhaber: Deutsche Institute für Textil- und Faserforschung Denkendorf, 73770 Denkendorf (DE); W+R GmbH, 72555 Metzingen (DE)
(72) Erfinder: STEGMAIER, Thomas, 73277 Owen (DE); SCHERRIEBLE, Andreas, 71638 Ludwigsburg (DE); JUNGER, Hannes, 72555 Metzingen (DE)
(74) Vertreter: Patentanwälte Ruff, Wilhelm, Beier, Dauster & Partner mbB
(86) Internationale Anmeldenummer: PCT/EP2017/053793
(87) Internationale Veröffentlichungsnummer: WO 2017/140908

(56) Entgegenhaltungen:
- US-A- 5 200 263
- US-A- 5 601 895

## Beschreibung

### ANWENDUNGSGEBIET UND STAND DER TECHNIK

Die Erfindung betrifft eine Verbundstruktur für den Stichschutz, ein Verfahren zur Herstellung einer solchen Verbundstruktur, eine Stichschutzeinlage, ein Schutztextil, die Verwendung einer Verbundstruktur als Stichschutzeinlage sowie zur Herstellung eines Schutztextils.

Stichschutz ist aus dem Stand der Technik bekannt.

So offenbart die DE 44 13 969 A1 einen Stichschutz für den Körper mit mehreren Lagen dünner, flexibler Metallfolien.

Körperschutzpanzerungen, welche sich insbesondere für den Stichschutz eignen, sind aus der EP 1 238 595 A2 sowie EP 1 787 537 A2 bekannt. Die Körperschutzpanzerungen bestehen jeweils aus mindestens zwei Flächenelementen, welche zur körpergerechten Anpassung unter Bildung von Spaltöffnungen mittels Gelenken miteinander verbunden sind, wobei zum Verschluss der Spaltöffnungen Verschlusselemente vorgesehen sind.

Aus der WO 2008/080611 A2 ist eine Körperschutzpanzerung aus einer Vielzahl von kegelförmigen, kegelstumpfförmigen, pyramidenförmigen und/oder pyramidenstumpfförmigen Panzerelementen bekannt. Die Panzerelemente können eine mehrlagige Matrixanordnung bilden, wobei die Panzerelemente einer ersten Lage und die Panzerelemente einer zweiten Lage auf Lücke versetzt zueinander angeordnet sind.

Eine Schutzkleidung zum Schutz gegen Verletzungen durch Stichgeräte, Schneidgeräte, Geschosse oder Splitter ist aus der WO 96/03277 A1 bekannt. Die Schutzkleidung ist aus mehreren Lagen von Flächengebilden aufgebaut, wobei mindestens eine der Lagen auf mindestens einer Seite eine mittels Plasmasprühbeschichtung aufgebrachte Keramikschicht enthält.

Die DE 44 07 180 C1 offenbart eine Stichschutzeinlage für eine ein ballistisches Schutzpaket umfassende Schutzweste. Die Stichschutzeinlage besteht aus einem Stahlkettennetz, welches in einer flexiblen Kunststoffmatrix eingebettet ist.

Weiterhin ist aus der DE 198 02 242 A1 eine Schutzkleidung zum Schutz gegen Stich- und/oder Schussverletzungen bekannt, welche aus mehreren Lagen von Flächengebilden aus hochfesten Materialien besteht, wobei mehr als eine der Lagen mit einer Hartstoffschicht beschichtet ist.

Eine Kompositstruktur mit einem Ledersubstrat sowie einem textilen Substrat ist in der WO 2012/166624 A1 beschrieben. Auf der Oberfläche des textilen Substrats befinden sich abstehende, ausgehärtete Polymerplättchen.

Aus der DE 42 14 543 A1 ist ein Körperschutz in Form einer Schutzhülle bekannt. In der Schutzhülle sind mehrere, einander überlappende und teilweise gegeneinander verschiebbare, stichfeste, plattenförmige Stichschutzmittel vorgesehen. Unter den Stichschutzmitteln sind ein Kugelschutz und unter dem Kugelschutz ein Schockabsorber vorgesehen.

Ein Stichschutzgewebe ist aus der DE 198 19 737 A1 bekannt. Das Gewebe besteht aus einer Vielzahl von miteinander verbundenen, sich ziegeldachartig überlappenden Schuppen, welche zur Verbindung untereinander Bohrungen aufweisen, in welche Verbindungselemente eintauchen.

Die DE 198 33 816 A1 offenbart eine flexible Schutzfläche zum Einsatz im Personenschutz. Die Schutzfläche besteht aus beweglich verbundenen Schutzelementen, wobei ein jedes Schutzelement sowohl von anderen teilweise überragt oder überdeckt wird als auch andere teilweise überragt oder überdeckt.

Gegenstand der DE 20 007 820 U1 ist eine Schutzweste, welche sowohl für ballistischen Schutz als auch für Stichschutz geeignet ist. Die Schutzweste besteht aus einem ballistischen Schutzpaket und einem diesem Aufbau vorgelagerten und von diesem wieder abtrennbaren Stichschutzelement. Das Stichschutzelement selbst besteht aus einem Ringgeflecht, welches zwischen zwei Lagen eines textilen Flächengebildes angeordnet ist.

Ein Stichschutzmaterial mit einem flexiblen Medium sowie darin eingebetteten flächigen Stichschutzelementen zum Schutz vor Unfallverletzungen mit Nadeln, Skalpellen, Messern oder anderen spitzen Instrumenten ist aus der US 5,601,895 bekannt. Ein entsprechend gestaltetes Stichschutzmaterial ist ferner Gegenstand der US 5,200,263.

Der aus dem Stand der Technik bekannte Stichschutz hat mitunter den Nachteil, dass eine zu große Gesamtdicke des Stichschutzes die Funktionalität von Gegenständen, in welche der Stichschutz eingelegt werden soll, beeinträchtigen kann. Beispielsweise kann ein zu dicker Stichschutz für Schutztextilien die Anpassung an Körperstrukturen und insbesondere die Erzielung eines ausreichenden Tragekomforts erschweren oder gar unmöglich machen. Ein weiterer Nachteil besteht darin, dass bei gattungsgemäßem Stichschutz ein gewisses Risiko besteht, dass der Schutz vor Stichverletzungen versagt. Beispielsweise besteht das Risiko, das für den Stichschutz vorgesehene Strukturelemente bei Kontakt mit einem spitzen Gegenstand, wie beispielsweise einer Nadel oder einer Spritzenkanüle, nachgeben, wodurch der spitze Gegenstand in tiefere Schichten des Stichschutzes gelangen und diesen möglicherweise sogar vollständig durchdringen kann.

### AUFGABE UND LÖSUNG

Der vorliegenden Erfindung liegt daher die Aufgabe zugrunde, einen Stichschutz bereitzustellen, welcher aus dem Stand der Technik bekannte Unzulänglichkeiten umgeht. Insbesondere soll der Stichschutz mit möglichst niedriger Gesamtdicke realisiert werden können und trotzdem einen ausreichenden Schutz vor Stichverletzungen gewährleisten.

Weiterhin liegt der Erfindung die Aufgabe zugrunde, ein Verfahren zur Herstellung eines Stichschutzes, eine Stichschutzeinlage sowie ein Schutztextil bereitzustellen.

Diese Aufgaben werden erfindungsgemäß gelöst durch eine Verbundstruktur gemäß unabhängigem Anspruch 1, ein Verfahren zur Herstellung einer Verbundstruktur gemäß unabhängigem Anspruch 11, sowie durch eine Stichschutzeinlage oder ein Schutztextil gemäß Anspruch 15. Bevorzugte Ausführungsformen sind in den abhängigen Ansprüchen definiert. Der Wortlaut sämtlicher Ansprüche wird hiermit durch ausdrückliche Bezugnahme zum Inhalt der vorliegenden Beschreibung gemacht.

Die Erfindung betrifft eine Verbundstruktur für den Stichschutz, insbesondere in Form einer Stichschutzeinlage.

Die Verbundstruktur weist übereinander angeordnete Lagen von Flächenelementen und ein Einbettungsmaterial auf.

Bei wenigstens einem Teil der übereinander angeordneten Lagen sind die Flächenelemente benachbarter Lagen zueinander versetzt angeordnet. Mit anderen Worten sind bei wenigstens einem Teil der übereinander angeordneten Lagen die Flächenelemente einer Lage versetzt zu wenigstens einer benachbarten Lage, d.h. einer darunterliegenden Lage und/oder darüberliegenden Lage, angeordnet.

Die Verbundstruktur kann daher grundsätzlich auch übereinander angeordnete Lagen von Flächenelementen aufweisen, welche nicht zueinander versetzt angeordnet sind.

Erfindungsgemäß ist es jedoch unter Stichschutzgesichtspunkten bevorzugt, wenn die Verbundstruktur ausschließlich zueinander versetzt angeordnete Lagen von Flächenelementen aufweist. Anders ausgedrückt, es ist erfindungsgemäß bevorzugt, wenn die Flächenelemente benachbarter Lagen zueinander versetzt angeordnet sind.

Die Flächenelemente der Verbundstruktur bzw. die Lagen von Flächenelementen sind wenigstens teilweise, vorzugsweise vollständig, in das Einbettungsmaterial eingebettet.

Unter dem Ausdruck "Verbundstruktur" soll im Sinne der vorliegenden Erfindung vorzugsweise eine Struktur aus zwei oder mehr miteinander verbundenen Materialien oder Teilstrukturen verstanden werden. Die erfindungsgemäße Verbundstruktur weist als Materialien bzw. Teilstrukturen zumindest Flächenelemente, insbesondere eine mehrlagige Anordnung auf Basis von Flächenelementen, sowie ein Einbettungsmaterial auf.

Unter dem Ausdruck "Stichschutz" soll im Sinne der vorliegenden Erfindung der Schutz vor Verletzungen durch spitze Gegenstände, insbesondere Nadeln oder nadelförmige Gegenstände, wie beispielsweise medizinische Kanülen, verstanden werden.

Unter dem Ausdruck "Stichschutzeinlage" soll im Sinne der vorliegenden Erfindung eine Einlage für andere Gegenstände, insbesondere Textilien, vorzugsweise Schutztextilien, wie insbesondere Schutzhandschuhe, zum Zwecke des Stichschutzes verstanden werden.

Unter dem Ausdruck "Einbettungsmaterial" soll im Sinne der vorliegenden Erfindung ein Material verstanden werden, welches derart beschaffen ist, dass es in einem vorzugsweise nicht ausgehärteten Zustand, insbesondere in einem verflüssigten, vorzugsweise geschmolzenen, Zustand eine wenigstens teilweise, vorzugsweise vollständige, Einbettung der Flächenelemente bzw. von Lagen der Flächenelemente erlaubt.

Die erfindungsgemäße Verbundstruktur zeichnet sich mit anderen Worten insbesondere dadurch aus, dass sie eine mehrlagige Anordnung von Flächenelementen aufweist, welche wenigstens teilweise in ein Einbettungsmaterial eingebettet ist.

Die Funktion der Flächenelemente besteht (vorrangig) in der Gewährleistung eines Stichschutzes. Die Flächenelemente können daher auch als flächige Stichschutzelemente bezeichnet werden.

Eine mehrlagige Anordnung von Flächenelementen bietet die Möglichkeit eines ausreichenden Stichschutzes und gleichzeitig die Möglichkeit der Realisierung einer Verbundstruktur mit niedriger Gesamtdicke. Die niedrige Gesamtdicke führt insbesondere bei Schutztextilien, wie beispielsweise Schutzhandschuhen, zu einer verbesserten Anpassung an Körperstrukturen, wie beispielsweise an Hände, wodurch die Funktionalität, wie beispielsweise die Greifmöglichkeiten, und gleichzeitig der Tragekomfort verbessert werden.

Eine versetzte Anordnung von Lagen zueinander bietet den zusätzlichen Vorteil, dass offene Bereiche, insbesondere Öffnungen, bevorzugt Spalten, zwischen benachbarten Flächenelementen einer Lage durch Flächenelemente einer darunterliegenden und/oder darüberliegenden Lage abgedeckt werden können. Dadurch kann wenigstens eine vollständige Durchdringung der Verbundstruktur mit einem spitzen Gegenstand, wie beispielsweise einer Nadel oder einer Spritzenkanüle, praktisch ausgeschlossen werden. Dies trägt zu einer wesentlichen Verbesserung des Stichschutzes bei.

Das Einbettungsmaterial bewirkt mit besonderem Vorteil den Zusammenhalt der Verbundstruktur und verleiht dieser zusätzlich eine gewisse Flexibilität und insbesondere Weichheit, wodurch die Funktionalität und der Tragekomfort der Verbundstruktur zusätzlich verbessert werden. Außerdem wird ein Eindringen eines spitzen Gegenstandes, wie beispielsweise einer Nadel oder einer Spritzenkanüle, in die Verbundstruktur durch das Einbettungsmaterial erschwert, da aufgrund des Einbettungsmaterials für ein Ein- oder Durchdringen eines spitzen Gegenstandes eine höhere Ein- oder Durchstichkraft aufgewendet werden muss. Insoweit trägt das Einbettungsmaterial ebenfalls zur Stichschutzfunktion der Verbundstruktur bei.

In einer bevorzugten Ausführungsform sind die Flächenelemente jeweils durch eine Länge, eine Breite sowie eine Dicke (Höhe) definiert.

In einer weiteren Ausführungsform weisen die Flächenelemente jeweils eine größere Länge als Dicke auf.

Die Flächenelemente weisen in einer weiteren Ausführungsform eine Länge von 0.25 mm bis 10 mm, insbesondere 0.5 mm bis 5 mm, vorzugsweise 1 mm bis 3 mm, auf.

In einer weiteren Ausführungsform weisen die Flächenelemente jeweils eine größere Breite als Dicke auf.

In einer weiteren Ausführungsform weisen die Flächenelemente jeweils eine größere Länge als Breite auf.

In einer alternativen Ausführungsform weisen die Flächenelemente jeweils eine gleich große Länge und Breite auf.

Die Flächenelemente weisen in einer weiteren Ausführungsform eine Breite von 0.25 mm bis 10 mm, insbesondere 0.5 mm bis 5 mm, vorzugsweise 1 mm bis 3 mm, auf.

In einer weiteren Ausführungsform weisen die Flächenelemente jeweils eine Länge und Breite auf, welche jeweils größer sind als die Dicke der Flächenelemente.

In einer weiteren Ausführungsform sind die Flächenelemente jeweils plättchenförmig, insbesondere quaderförmig, ausgebildet. Eine plättchenförmige, insbesondere quaderförmige, Ausgestaltung der Flächenelemente ist unter Stichschutzgesichtspunkten besonders vorteilhaft.

In einer weiteren Ausführungsform sind die Flächenelemente jeweils prismenförmig ausgebildet. Mit anderen Worten liegen die Flächenelemente in einer weiteren Ausführungsform jeweils in Form eines Prismas vor. Die Grund- und Deckfläche der Prismen können beispielsweise jeweils einen dreieckförmigen, viereckförmigen, quadratförmigen, rechteckförmigen, parallelogrammförmigen, fünfeckförmigen, sechseckförmigen, siebeneckförmigen, achteckförmigen, neuneckförmigen oder zehneckförmigen Umfang aufweisen. Auch andere polygone Umfänge der Grund- und Deckflächen der Prismen sind prinzipiell denkbar.

In einer weiteren Ausführungsform sind die Flächenelemente jeweils zylindrisch, insbesondere kreiszylindrisch, ausgebildet.

In einer weiteren Ausführungsform weisen die Flächenelemente jeweils einen größeren Durchmesser als Dicke auf.

In einer weiteren Ausführungsform weist die Verbundstruktur 2 bis 10, insbesondere 2 bis 4, übereinander angeordnete Lagen von Flächenelementen auf.

Unter Stichschutzgesichtspunkten kann es ausreichend sein, wenn die Verbundstruktur lediglich zwei übereinander angeordnete Lagen von Flächenelementen aufweist. Demnach kann die Verbundstruktur gemäß einer weiteren Ausführungsform nur zwei übereinander und zueinander versetzt angeordnete Lagen von Flächenelementen aufweisen.

In einer weiteren Ausführungsform sind benachbarte Flächenelemente innerhalb einer Lage durch Öffnungen, insbesondere Spalten, voneinander getrennt.

In einer weiteren Ausführungsform sind die Flächenelemente benachbarter Lagen jeweils in Längsrichtung der Flächenelemente und/oder in Breitenrichtung der Flächenelemente, vorzugsweise in Längsrichtung der Flächenelemente und in Breitenrichtung der Flächenelemente, versetzt zueinander angeordnet. Dadurch können mit besonderem Vorteil Öffnungen, insbesondere Spalten, zwischen Flächenelementen innerhalb einer Lage wenigstens teilweise, vorzugsweise vollständig, durch Flächenelemente einer darunter- und/oder darüber liegenden Lage abgedeckt werden. Hierdurch ist eine weitere Verbesserung des Stichschutzes erzielbar.

Grundsätzlich können die Flächenelemente benachbarter Lagen in Längsrichtung der Flächenelemente und in Breitenrichtung der Flächenelemente einen unterschiedlichen Versatz aufweisen.

Erfindungsgemäß ist es jedoch bevorzugt, wenn die Flächenelemente benachbarter Lagen jeweils in Längsrichtung der Flächenelemente und in Breitenrichtung der Flächenelemente einen gleichen Versatz aufweisen. Dadurch können einzelne Lagen zueinander auch um 90° gedreht angeordnet sein.

In einer weiteren Ausführungsform weist die Verbundstruktur eine alternierende Abfolge von Lagen auf, bei welcher sich Lagen, deren Flächenelemente einen Versatz in eine Längsrichtung der Flächenelemente und/oder in eine Breitenrichtung der Flächenelemente aufweisen, mit Lagen abwechseln, deren Flächenelemente einen Versatz, insbesondere einen gleichen Versatz, in die entgegengesetzte Längsrichtung der Flächenelemente und/oder in die entgegengesetzte Breitenrichtung der Flächenelemente aufweisen. Dadurch kann der Stichschutz zusätzlich verbessert werden.

In einer weiteren Ausführungsform sind die Flächenelemente innerhalb einer Lage ohne Versatz zueinander angeordnet.

Die Flächenelemente benachbarter Lagen weisen in einer weiteren Ausführungsform einen Abstand von 0.025 mm bis 2 mm, insbesondere 0.05 mm bis 1 mm, vorzugsweise 0.1 mm bis 0.5 mm, auf.

In einer weiteren Ausführungsform weisen benachbarte Flächenelemente innerhalb einer Lage einen Abstand, insbesondere einen lichten Abstand, von 0.05 mm bis 5 mm, insbesondere 0.1 mm bis 2 mm, vorzugsweise 0.5 mm bis 1 mm, auf.

In einer weiteren Ausführungsform sind die Flächenelemente innerhalb einer Lage ohne Abstand zueinander angeordnet.

In einer weiteren Ausführungsform sind die Flächenelemente der Verbundstruktur bzw. die übereinander angeordneten Lagen der Flächenelemente jeweils vollständig in das Einbettungsmaterial eingebettet, d.h., die Flächen aller Flächenelemente der Verbundstruktur sind vorzugsweise jeweils vollständig von dem Einbettungsmaterial bedeckt.

In einer weiteren Ausführungsform sind die Flächenelemente jeweils aus einem harten Material gebildet.

Vorzugsweise sind die Flächenelemente jeweils aus einem im Vergleich zu dem Einbettungsmaterial härteren Material gebildet.

Beispielsweise kann das Material der Flächenelemente eine Mohs-Härte (Härtebestimmungsmethode nach Mohs; Einheit: Mohs; Ritzehärteskala mit 10 Stufen) von 3 bis 10, insbesondere 5 bis 7, aufweisen.

Die Flächenelemente weisen in einer weiteren Ausführungsform ein Material auf oder sind aus einem Material gebildet, welches ausgewählt ist aus der Gruppe bestehend aus Metall, Blech, Polymer, insbesondere Kunststoff, Keramikmaterial, Quarz und Kombinationen, insbesondere Verbundmaterialien bzw. Verbundwerkstoffe, aus zwei oder mehreren der genannten Materialien.

Das Metall kann ausgewählt sein aus der Gruppe bestehend aus Leichtmetallen wie Aluminium, Titan, Stahl und Kombinationen, insbesondere Legierungen, davon.

Weiterhin kann das Metall ein Hartmetall sein, insbesondere aus 90 bis 94 % Wolframcarbid und 6 bis 10 % Kobalt.

Das Polymer kann ausgewählt sein aus der Gruppe bestehend aus Polyamid, insbesondere Aramid, hochfestes Polyolefin, elastisches Polymer und Kombinationen, insbesondere Blends oder Verbundmaterialien (bzw. Verbundwerkstoffe), aus zwei oder mehreren der genannten Polymere.

Das elastische Polymer kann ausgewählt sein aus der Gruppe bestehend aus Epoxidharz, Polyurethan, Silikon, Siloxan, Gummi und Kombinationen, insbesondere Blends oder Verbundmaterialien (bzw. Verbundwerkstoffe), aus zwei oder mehreren der genannten Polymere.

Das Keramikmaterial kann aus der Gruppe bestehend aus Silikatkeramik, Oxidkeramik, Nicht-Oxid-Keramik und Kombinationen, insbesondere Verbundmaterialien bzw. Verbundwerkstoffe, aus zwei oder mehreren der genannten Keramiken ausgewählt sein. Zur Herstellung des Keramikmaterials können beispielsweise Rohstoffe verwendet werden, welche ausgewählt sind aus der Gruppe bestehend aus Aluminiumoxid, Zirkoniumoxid, Calciumoxid, Magnesiumoxid, Titandioxid, Siliziumdioxid, Aluminiumsilikat, Calciumsilikat, Magnesiumsilikat, Siliziumcarbid, Zirkoniumcarbid und Kombinationen aus zwei oder mehreren der genannten Rohstoffe.

Grundsätzlich kann es sich bei den Flächenelementen um textile Flächenelemente und/oder um nicht-textile Flächenelemente handeln. Erfindungsgemäß ist es jedoch bevorzugt, wenn es sich bei den Flächenelementen jeweils um nicht-textile Flächenelemente, insbesondere um Flächenelemente mit durchgehend geschlossenen Oberflächen, das heißt ohne Öffnungen, Spalten, Risse, Perforationen oder dergleichen, handelt. Dadurch ist eine weitere Verbesserung des Stichschutzes realisierbar.

In einer weiteren Ausführungsform handelt es sich bei den Flächenelementen jeweils um massive Flächenelemente, d.h. um Flächenelemente ohne Hohlräume.

In einer weiteren Ausführungsform sind die Flächen der Flächenelemente jeweils flach, das heißt ohne Erhebungen oder Senkungen, ausgebildet.

In einer weiteren Ausführungsform sind die Flächen der Flächenelemente jeweils gerade ausgebildet.

In einer weiteren Ausführungsform weisen die Flächenelemente jeweils eine gleichbleibende, d.h. durchgehend konstante, Dicke auf.

Die Flächenelemente weisen in einer weiteren Ausführungsform jeweils eine Dicke von 0.025 mm bis 2 mm, insbesondere 0.05 mm bis 1 mm, vorzugsweise 0.1 mm bis 0.5 mm, auf. Insbesondere die in diesem Absatz genannten Dicken haben den Vorteil, dass sie einerseits einen ausreichenden Stichschutz gewährleisten, andererseits jedoch die Realisierung einer Verbundstruktur mit einer geringen Gesamtdicke ermöglichen.

In einer weiteren Ausführungsform sind die Flächenelemente der übereinander angeordneten Lagen unterschiedlich ausgebildet. Beispielsweise können sich die Flächenelemente der übereinander angeordneten Lagen hinsichtlich ihrer Abmessungen, wie beispielsweise hinsichtlich ihrer Länge, Breite und/oder Dicke oder hinsichtlich ihres Durchmesser und/oder ihrer Dicke, hinsichtlich eines Versatzes, hinsichtlich ihrer Materialien und/oder hinsichtlich ihrer Form bzw. Gestalt voneinander unterscheiden.

In einer unter Stabilitätsgesichtspunkten vorteilhaften Ausführungsform sind Flächenelemente, insbesondere benachbarte Flächenelemente innerhalb einer Lage und/oder Flächenelemente benachbarter Lagen, über Verbindungselemente miteinander verbunden, insbesondere biegeweich miteinander verbunden.

Die Verbindungselemente können weiterhin eine Dicke von 0.01 mm bis 1 mm, insbesondere 0.02 mm bis 0.5 mm, vorzugsweise 0.04 mm bis 0.1 mm, aufweisen.

Des Weiteren können die Verbindungelemente einen runden oder unrunden, insbesondere einen polygonalen, Querschnitt aufweisen. Beispielsweise können die Verbindungselemente einen viereckförmigen, insbesondere rechteckförmigen oder quadratischen, Querschnitt aufweisen.

Insbesondere können Flächenelemente benachbarter Lagen über Verbindungselemente miteinander verbunden sein, welche senkrecht von den Oberflächen der verbundenen Flächenelemente oder in einem spitzen Winkel, das heißt in einem Winkel kleiner 90°, von den Oberflächen der verbundenen Flächenelemente abstehen. Erfindungsgemäß ist es bevorzugt, wenn die Verbindungselemente in einem spitzen Winkel von den Oberflächen der miteinander verbundenen Flächenelemente abstehen. Dadurch können die einzelnen Lagen der Flächenelemente bei Druckbeaufschlagung, insbesondere bei Kontakt mit einem spitzen Gegenstand, wie beispielsweise einer Nadel oder einer Spritzenkanüle, besser zusammengedrückt werden. Dies bewirkt eine Verbesserung der Flexibilität der Verbundstruktur.

Die Verbundstruktur weist durchtrennte, insbesondere aufgebrochene, Verbindungselemente auf. Die durchtrennten, insbesondere aufgebrochenen, Verbindungselemente haben vor ihrem Durchtrennen, insbesondere Aufbrechen, wenigstens einen Teil der Flächenelemente, insbesondere wenigstens einen Teil der Flächenelemente benachbarter Lagen, miteinander verbunden. Die Verbundstruktur weist somit durchtrennte, insbesondere aufgebrochene, Verbindungselemente auf, deren freien Enden in Richtung Flächenelemente benachbarter Lagen weisen. Die Verbindungsstruktur kann insbesondere ausschließlich durchtrennte, insbesondere aufgebrochene, Verbindungselemente aufweisen, welche vor ihrem Durchtrennen, insbesondere Aufbrechen, Flächenelemente benachbarter Lagen miteinander verbunden haben. Durch ein Durchtrennen der Verbindungselemente lässt sich mit besonderem Vorteil die Flexibilität der Verbundstruktur zusätzlich erhöhen.

Weiterhin kann die Verbundstruktur sowohl durchtrennte, insbesondere aufgebrochene, Verbindungselemente als auch intakte Verbindungselemente, d.h. Verbindungselemente, welche Flächenelemente, insbesondere benachbarte Flächenelemente innerhalb einer Lage und/oder Flächenelemente benachbarter Lagen, miteinander verbinden, aufweisen. Erfindungsgemäß kann es jedoch auch vorgesehen sein, dass die Verbundstruktur ausschließlich durchtrennte, insbesondere aufgebrochene, Verbindungselemente aufweist.

Bei den Verbindungselementen handelt es sich in einer weiteren Ausführungsform um längliche, insbesondere stegförmige, Verbindungselemente, das heißt um sogenannte Verbindungsstege. Entsprechend handelt es sich bei den oben erwähnten durchtrennten Verbindungselementen in einer weiteren Ausführungsform um durchtrennte, längliche, insbesondere durchtrennte, stegförmige Verbindungselemente, das heißt um sogenannte durchtrennte Verbindungsstege.

Die Verbindungselemente können grundsätzlich das gleiche Material aufweisen oder aus dem gleichen Material gebildet sein wie die Flächenelemente. Alternativ können die Verbindungselemente ein anderes Material aufweisen oder aus einem anderen Material gebildet sein als die Flächenelemente. Bezüglich des Materials wird zur Vermeidung von Wiederholungen vollständig auf die im Zusammenhang mit den Flächenelementen beschriebenen Materialien Bezug genommen. Die Verbindungselemente können somit ein oder mehrere der in diesem Zusammenhang genannten Materialien aufweisen oder aus einem oder mehreren der in diesem Zusammenhang genannten Materialien gebildet sein.

In einer weiteren Ausführungsform sind die Flächenelemente bzw. die übereinander angeordneten Lagen von Flächenelementen und/oder gegebenenfalls vorgesehene Verbindungselemente, insbesondere wie in den vorangegangenen Ausführungsformen beschrieben, mittels eines generativen Fertigungsverfahrens bzw. mittels additiver Fertigung (Rapid Prototyping) hergestellt. Hierunter versteht man Verfahren zur schnellen und kostengünstigen Fertigung von Modellen, Mustern, Prototypen, Werkzeugen und Endprodukten. Diese Fertigung erfolgt direkt auf der Basis von rechnerinternen Datenmodellen aus formlosem Material (Flüssigkeiten, Pulver und Ähnlichem) oder formneutralem Material (band-, drahtförmig) mittels chemischer und/oder physikalischer Prozesse. Obwohl es sich um urformende Verfahren handelt, sind für ein konkretes Erzeugnis keine speziellen Werkzeuge erforderlich, welche die jeweilige Geometrie des Werkstückes gespeichert haben.

Bei dem generativen Fertigungsverfahren kann es sich grundsätzlich um ein Pulverbettverfahren, Freiraumverfahren, Flüssigmaterialverfahren oder um ein anderes Schichtbauverfahren handeln.

Das Pulverbettverfahren kann ausgewählt sein aus der Gruppe bestehend aus selektives Laserschmelzen, selektives Lasersintern, selektives Hitzesintern (Selective Heat Sintering), Verfestigen von Pulvermaterial mittels Binder (Binder Jetting) und Elektronenstrahlschmelzen.

Das Freiraumverfahren kann ausgewählt sein aus der Gruppe bestehend aus Schmelzschichtung (Fused Deposition Modelling), LOM-Verfahren (Laminated Object Modelling-Verfahren), Auftragsschweißen (Cladding), Wachs-Depositions-Modellierung (Wax Deposition Modelling), Contour Grafting, Kaltgasspritzen und Elektronenstrahlschmelzen.

Das Flüssigmaterialverfahren kann ausgewählt sein aus der Gruppe bestehend aus Stereolithographie, DLP-Verfahren (Digital Light Processing-Verfahren) und LCM-Verfahren. Das LCM-Verfahren kann ein Liquid Composite Moulding-Verfahren oder ein Lithography-based Ceramic Manufacturing-Verfahren sein.

Die Verwendung von generativen Fertigungsverfahren zur Herstellung der Flächenelemente bzw. übereinander angeordneter Lagen von Flächenelementen hat den besonderen Vorteil, dass sich hierdurch Flächenelemente in sehr dünner Ausgestaltung und mit ausreichender Stichschutzfunktion und insbesondere über Verbindungselemente zusammenhängende mehrlagige Anordnungen von Flächenelementen mit sehr geringer Gesamtdicke realisieren lassen. Dies trägt entscheidend zur Herstellung einer unter Stichschutzgesichtspunkten wirkungsvollen Verbundstruktur mit sehr dünner Gesamtdicke bei. Ein weiterer Vorteil generativer Fertigungsverfahren besteht darin, dass hinsichtlich der Materialien, wie beispielsweise hinsichtlich von Metallen und/oder Kunststoffen, nahezu keine Einschränkungen existieren.

Gemäß einer besonders bevorzugten Ausführungsform sind die Flächenelemente bzw. die übereinander angeordneten Lagen von Flächenelementen und/oder gegebenenfalls vorgesehene Verbindungselemente, insbesondere wie in den vorangegangenen Ausführungsformen beschrieben, mittels Lasersintern oder Laserschmelzen hergestellt.

In einer alternativen Ausführungsform sind die Flächenelemente bzw. die übereinander angeordneten Lagen von Flächenelementen mittels Umformen, insbesondere mittels Blechumformung, hergestellt.

In einer alternativen Ausführungsform sind die Flächenelemente bzw. die übereinander angeordneten Lagen von Flächenelementen mittels Laserstrahl- oder Wasserstrahlschneiden hergestellt. Hierdurch lassen sich beispielsweise ausgehend von großflächigen Substraten durch die Erzeugung von Perforationen lagenförmige Anordnungen von Flächenelementen herstellen, wobei die Flächenelemente über Verbindungselemente, insbesondere stegförmige Verbindungselemente, das heißt sogenannte Verbindungsstege, miteinander verbunden sind.

In einer weiteren Ausführungsform sind die Flächenelemente bzw. die übereinander angeordneten Lagen von Flächenelementen mittels Polymerabscheidung in Kombination mit einem keramisierenden Prozess hergestellt. Bei dieser Ausführungsform werden die Flächenelemente aus einem Polymer hergestellt, wobei die organischen Bestandteile in einem sich anschließenden Keramisierungsprozess unter Sauerstoffausschluss und erhöhter Temperatur ausgetrieben bzw. umgewandelt werden, wobei Flächenelemente aus einer feinstrukturierten Keramik erhalten werden.

Bei dem Einbettungsmaterial kann es sich grundsätzlich um ein textiles Einbettungsmaterial oder um ein nicht-textiles Einbettungsmaterial handeln. Erfindungsgemäß ist es bevorzugt, wenn es sich bei dem Einbettungsmaterial um ein nicht-textiles Einbettungsmaterial handelt.

Bei dem Einbettungsmaterial handelt es sich in einer weiteren Ausführungsform um eine Einbettungsmatrix.

In einer zweckmäßigen Ausführungsform liegt das Einbettungsmaterial in verfestigter, insbesondere ausgehärteter, Form vor. Mit anderen Worten handelt es sich bei dem Einbettungsmaterial gemäß einer zweckmäßigen Ausführungsform um ein verfestigtes, insbesondere ausgehärtetes, Einbettungsmaterial.

Das Einbettungsmaterial ist vorzugsweise ein flexibles, insbesondere elastisches, Einbettungsmaterial.

Weiterhin ist das Einbettungsmaterial vorzugsweise ein weiches Einbettungsmaterial.

In einer weiteren Ausführungsform weist das Einbettungsmaterial ein Material, insbesondere Polymer, auf oder ist aus einem Material, insbesondere Polymer, gebildet, welches ausgewählt ist aus der Gruppe bestehend aus Polysiloxan wie Polyorganosiloxan, ein Elastomer, ein thermoplastisches Elastomer, ein Kautschuk, ein Polyurethan oder Kombinationen, insbesondere Blends oder Verbundmaterialien (bzw. Verbundwerkstoffe), aus zwei oder mehreren der genannten Materialien, insbesondere Polymere.

Bei dem thermoplastischen Elastomer kann es sich um ein thermoplastisches Copolyamid oder um eine Elastomerlegierung handeln. Unter dem Ausdruck "thermoplastisches Copolyamid" soll im Sinne der vorliegenden Erfindung ein thermoplastisches Polyamid verstanden werden, welches wenigstens zwei unterschiedliche Amideinheiten (als Monomereinheiten) aufweist. Unter dem Ausdruck "Elastomerlegierung soll im Sinne der vorliegenden Erfindung ein Polyblend, also eine Zusammenmischung (Gemenge), von fertigen Elastomeren verstanden werden.

Das thermoplastische Elastomer kann ausgewählt sein aus der Gruppe bestehend aus thermoplastisches Copolyamid, thermoplastisches Polyesterelastomer, thermoplastisches Elastomer auf Olefinbasis, Styrol-Block-Copolymer, thermoplastisches Elastomer auf Urethanbasis, vernetztes thermoplastisches Elastomer auf Olefinbasis und Kombinationen, insbesondere Copolymere, Blends oder Verbundmaterialien (bzw. Verbundwerkstoffe), aus zwei oder mehreren der genannten thermoplastischen Elastomere.

Beispielsweise kann das thermoplastische Elastomer ausgewählt sein aus der Gruppe bestehend aus Polyether-Block-Amid-Block-Copolymer (beispielsweise unter Pebax^{®} TPE-A kommerziell erhältlich), Naturkautschuk (cis-1,4-Polyisopren), Synthesekautschuk, Polybutadien-Kautschuk, Styrol-Butadien-Kautschuk, Ethylen-Propylen-Kautschuk, Ethylen-Vinyl-Acetat-Kautschuk, Ethylen-Propylen-Dien-Kautschuk (EPDM), Butylkautschuk, Nitrilkautschuk, Chloropren-Kautschuk, Silikonkautschuk, Styrol-Butadien-Block-Copolymere, Acrylnitril-Butadien-Styrol-Copolymere, Styrol-Acrylnitril-Copolymere, Styrol-Butadien-Pfropf-Copolymere, Styrol-Butadien-Elastomer, Silikon-Copolymere und Kombinationen, insbesondere Copolymere, Blends oder Verbundmaterialien (bzw. Verbundwerkstoffe), aus zwei oder mehreren der genannten Polymere.

In einer weiteren Ausführungsform weist die Verbundstruktur eine Gesamtdicke von 0.1 mm bis 6 mm, insbesondere 0.4 mm bis 3 mm, vorzugsweise 0.6 mm bis 1.2 mm, auf. Insbesondere die in diesem Absatz offenbarten Gesamtdicken haben den Vorteil, dass sie nahezu keinerlei Beeinträchtigung der angestrebten Funktionalität von Gegenständen, wie insbesondere Schutztextilien, vorzugsweise Schutzbekleidung, in welche die Verbundstruktur, insbesondere in Form einer Stichschutzeinlage, eingelegt werden kann, führen. Im Falle von Schutzbekleidung besteht ein weiterer Vorteil darin, dass insbesondere die in diesem Absatz beschriebenen Gesamtdicken den Tragekomfort nicht oder wenigstens nicht nennenswert beeinträchtigen.

In einer weiteren Ausführungsform handelt es sich bei der Verbundstruktur um eine Stichschutzeinlage, insbesondere für Schutzkleidung, vorzugsweise für Schutzhandschuhe.

Es versteht sich, dass die Verbundstruktur auch Merkmale von Kombinationen der vorangehend beschriebenen Ausführungsformen aufweisen kann.

Die Erfindung betrifft weiterhin ein Verfahren zur Herstellung einer Verbundstruktur für den Stichschutz, insbesondere einer Verbundstruktur wie in den vorangegangenen Ausführungsformen beschrieben.

Das Verfahren weist die folgenden Schritte auf:
a) Herstellen von Lagen von Flächenelementen,
b) Einbetten der Lagen von Flächenelementen in ein noch nicht verfestigtes Einbettungsmaterial und
c) Verfestigen des Einbettungsmaterials.

In einer bevorzugten Ausführungsform wird der Schritt a) mittels eines generativen Fertigungsverfahrens, insbesondere mittels Lasersintern oder Laserschmelzen, durchgeführt. Bezüglich weiterer Merkmale und Vorteile des generativen Fertigungsverfahrens wird vollständig auf die bisherige Beschreibung Bezug genommen. Die dort beschriebenen Merkmale und Vorteile des generativen Fertigungsverfahrens gelten sinngemäß auch im Hinblick auf das erfindungsgemäße Verfahren.

Beim Schritt a) wird eine Anordnung aus mehreren übereinander angeordneten Lagen von Flächenelementen hergestellt, wobei wenigstens ein Teil der Lagen zueinander versetzt angeordnet ist.

Vorzugsweise wird beim Schritt a) eine Anordnung aus mehreren übereinander angeordneten Lagen von Flächenelementen hergestellt, wobei benachbarte Lagen jeweils zueinander versetzt angeordnet sind.

Zur Herstellung der Anordnung werden Flächenelemente benachbarter Lagen über Verbindungselemente, insbesondere über längliche Verbindungselemente, vorzugsweise über stegförmige Verbindungselemente, das heißt über sogenannte Verbindungsstege, miteinander verbunden.

Insbesondere können zur Herstellung der Anordnung ausschließlich Flächenelemente benachbarter Lagen über Verbindungselemente, insbesondere über längliche Verbindungselemente, vorzugsweise über stegförmige Verbindungselemente, d.h. über sogenannte Verbindungsstege, miteinander verbunden werden.

Die Verbindungselemente werden nach Schritt c) durchtrennt, insbesondere aufgebrochen. Vorzugsweise werden die Verbindungselemente mechanisch durchtrennt, insbesondere mittels Kalandrieren oder Umlenken auf einer Walze.

In einer weiteren Ausführungsform werden beim Schritt a) die Lagen, insbesondere in Form von einzelnen Lagen (sogenannte Einzellagen), mittels Laser- oder Wasserstrahlschneiden hergestellt. Die Lagen werden anschließend beim Schritt b) nacheinander bzw. aufeinanderfolgend in das Einbettungsmaterial eingebettet.

In einer alternativen Ausführungsform werden beim Schritt a) die Lagen, insbesondere in Form von einzelnen Lagen (sogenannte Einzellagen), mittels Polymerabscheidung in Kombination mit einem keramisierenden Prozess hergestellt.

In einer weiteren Ausführungsform wird beim Schritt b) ein flüssiges oder verflüssigtes, insbesondere geschmolzenes, Einbettungsmaterial verwendet.

Die Lagen werden in einer weiteren Ausführungsform beim Schritt b) nacheinander, d.h. aufeinanderfolgend, in das Einbettungsmaterial eingebettet.

In einer weiteren Ausführungsform wird beim Schritt b) wenigstens ein Teil der Lagen zueinander versetzt in das Einbettungsmaterial eingebettet. Vorzugsweise werden beim Schritt b) die Lagen jeweils zueinander versetzt in das Einbettungsmaterial eingebettet.

Beim Schritt b) können die Lagen grundsätzlich nur teilweise oder vollständig in das Einbettungsmaterial eingebettet werden. Vorzugsweise werden die Lagen beim Schritt b) vollständig in das Einbettungsmaterial eingebettet.

In einer weiteren Ausführungsform werden beim Schritt b) die Lagen mittels Beschichten, insbesondere mittels Rakelbeschichten, in das Einbettungsmaterial eingebettet.

In einer weiteren Ausführungsform wird das Einbettungsmaterial beim Schritt c) durch Abkühlen verfestigt.

In einer alternativen Ausführungsform wird das Einbettungsmaterial beim Schritt c) durch Aushärten, beispielsweise durch Verdunsten von einem Lösungsmittel oder Lösungsmittelgemisch oder durch Zugabe eines Vernetzungsmittels, verfestigt.

Es versteht sich, dass das Verfahren auch Merkmale von Kombinationen der vorangehend beschriebenen Ausführungsformen aufweisen kann.

Bezüglich weiterer Merkmale und Vorteile des Verfahrens wird vollständig auf die bisherige Beschreibung Bezug genommen. Die dort insbesondere in Bezug auf die Verbundstruktur, die Lagen von Flächenelementen, die Flächenelemente, das Einbettungsmaterial sowie gegebenenfalls vorgesehene Verbindungselemente beschriebenen Merkmale und Vorteile gelten sinngemäß auch für das erfindungsgemäße Verfahren.

Die Erfindung betrifft weiterhin eine Stichschutzeinlage. Die Stichschutzeinlage weist eine Verbundstruktur gemäß der vorliegenden Erfindung auf oder besteht aus einer solchen Verbundstruktur.

Bezüglich weiterer Merkmale und Vorteile der Stichschutzeinlage wird ebenfalls vollständig auf die bisherige Beschreibung Bezug genommen. Die dort insbesondere in Bezug auf die Verbundstruktur, die Lagen der Flächenelemente, die Flächenelemente, das Einbettungsmaterial sowie gegebenenfalls vorgesehene Verbindungselemente beschriebenen Merkmale und Vorteile gelten sinngemäß auch für die erfindungsgemäße Stichschutzeinlage.

Die Erfindung betrifft weiterhin ein Schutztextil. Das Schutztextil weist eine Verbundstruktur gemäß der vorliegenden Erfindung auf.

Bei dem Schutztextil handelt es sich in einer bevorzugten Ausführungsform um Schutzbekleidung. Bei der Schutzbekleidung kann es sich grundsätzlich um einen Schutzanzug, eine Schutzweste oder Schutzhandschuhe handeln. Erfindungsgemäß ist es bevorzugt, wenn es sich bei der Schutzbekleidung um Schutzhandschuhe handelt.

Besonders bevorzugt handelt es sich bei dem Schutztextil um eine Stichschutzkleidung, insbesondere um Stichschutzhandschuhe.

Bezüglich weiterer Merkmale und Vorteile des Schutztextils wird ebenfalls vollständig auf die bisherige Beschreibung Bezug genommen. Die dort insbesondere in Bezug auf die Verbundstruktur, die Lagen von Flächenelementen, die Flächenelemente, das Einbettungsmaterial sowie gegebenenfalls vorgesehene Verbindungselemente beschriebenen Merkmale und Vorteile gelten sinngemäß auch für das erfindungsgemäße Schutztextil.

Weiterhin betrifft die Erfindung die Verwendung einer Verbundstruktur gemäß der vorliegenden Erfindung als Stichschutzeinlage, insbesondere für ein Schutztextil, bevorzugt für Schutzbekleidung, besonders bevorzugt für Schutzhandschuhe, insbesondere Stichschutzhandschuhe, oder zur Herstellung eines Schutztextils, insbesondere einer Schutzbekleidung, vorzugsweise von Schutzhandschuhen, insbesondere Stichschutzhandschuhen.

Bezüglich weiterer Merkmale und Vorteile der Verwendung wird ebenfalls vollständig auf die bisherige Beschreibung Bezug genommen. Die dort insbesondere in Bezug auf die Verbundstruktur, die Lagen der Flächenelemente, die Flächenelemente, das Einbettungsmaterial, gegebenenfalls vorgesehene Verbindungselemente, das Schutztextil sowie die Schutzbekleidung beschriebenen Merkmale und Vorteile gelten sinngemäß auch für die erfindungsgemäße Verwendung.

Weitere Merkmale und Vorteile der Erfindung ergeben sich aus der nachfolgenden Beschreibung von bevorzugten Ausführungsformen in Form von Beispielen, Figuren sowie der dazugehörigen Figurenbeschreibungen. Dabei können einzelne Merkmale der Erfindung jeweils für sich alleine oder in Kombination miteinander verwirklicht sein. Die nachfolgend beschriebenen Ausführungsformen dienen lediglich der weiteren Erläuterung der Erfindung, ohne diese hierauf zu beschränken.

### FIGURENKURZBESCHREIBUNG

Die Figuren zeigen schematisch:
- Fig. 1:: eine Seitenansicht einer nicht erfindungsgemäßen Verbundstruktur,
- Fig. 2.: eine Seitenansicht einer Ausführungsform einer erfindungsgemäßen Verbundstruktur,
- Fig. 3:: eine Draufsicht auf eine weitere Ausführungsform einer nicht erfindungsgemäßen Verbundstruktur.

### AUSFÜHRLICHE FIGURENBESCHREIBUNG

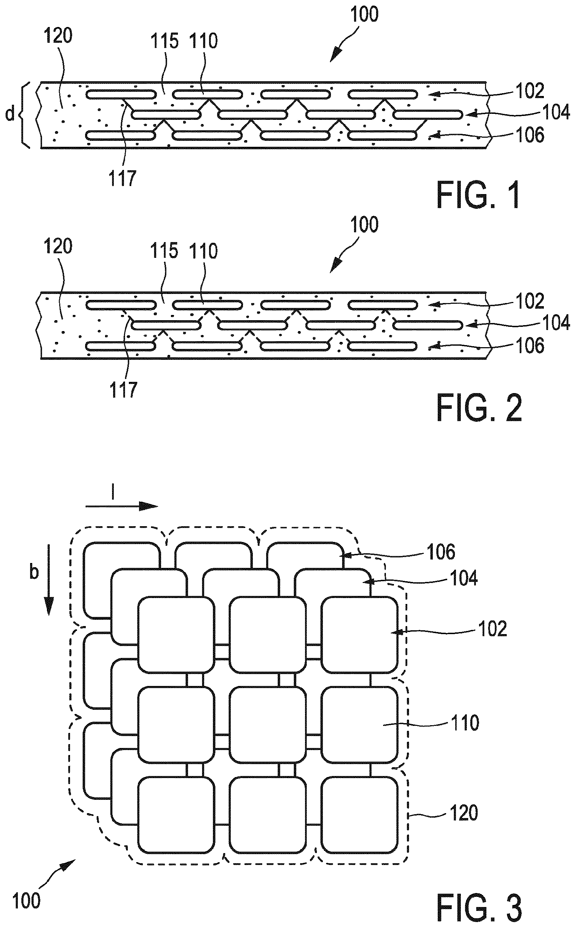

Fig. 1 zeigt schematisch die Seitenansicht einer nicht erfindungsgemäßen Verbundstruktur 100.

Die Verbundstruktur 100 weist übereinander angeordnete Lagen von Flächenelementen 110 auf. Die Verbundstruktur 100 kann beispielsweise, wie in Fig. 1 dargestellt, drei übereinander angeordnete Lagen 102; 104; 106 von Flächenelementen 110 aufweisen. Es versteht sich jedoch, dass eine erfindungsgemäße Verbundstruktur auch mehr als drei übereinander angeordnete Lagen von Flächenelementen aufweisen kann. Wie bereits erwähnt, kann es für einen ausreichenden Stichschutz sogar ausreichend sein, wenn die Verbundstruktur nur zwei übereinander angeordnete Lagen von Flächenelementen aufweist.

Die Flächenelemente 110 weisen jeweils eine Länge und eine Breite auf, welche jeweils größer sind als die Dicke der Flächenelemente 110. Die Flächenelemente 110 sind vorzugsweise plättchenförmig ausgestaltet. Hierdurch wird ein wirkungsvoller Stichschutz ermöglicht.

Weiterhin sind die Flächenelemente 110 benachbarter Lagen jeweils zueinander versetzt angeordnet. Durch die versetzte Anordnung der Lagen 102; 104; 106 können mit besonderem Vorteil Öffnungen, insbesondere Spalten, 115 zwischen benachbarten Flächenelementen 110 einer Lage 104 durch die Flächenelemente 110 einer darunterliegenden Lage 106 und/oder einer darüberliegenden Lage 102 abgedeckt werden. Dies bewirkt eine zusätzliche Erhöhung des Stichschutzes.

Die in Fig. 1 dargestellte Verbundstruktur weist eine alternierende Abfolge von Lagen auf, wobei zwei Lagen 102; 106 Flächenelemente 110 mit einem Versatz in eine Längsrichtung der Flächenelemente 110 und/oder in eine Breitenrichtung der Flächenelemente 110 aufweisen, und eine dazwischen angeordnete Lage 104 Flächenelemente 110 mit einem Versatz, insbesondere einem gleichen Versatz, in die entgegengesetzte Längsrichtung der Flächenelemente 110 der Lagen 102; 106 und/oder in die entgegengesetzte Breitenrichtung der Flächenelemente 110 der Lagen 102; 106 aufweisen.

Die Flächenelemente 110 benachbarter Lagen können zudem über Verbindungsstege 117 miteinander verbunden sein. Unter Flexibilitätsgesichtspunkten kann es vorteilhaft sein, wenn die Verbindungsstege 117 in einem spitzen Winkel von den Oberflächen der verbundenen Flächenelemente 110 abstehen.

Die Flächenelemente 110 bzw. die über die Verbindungsstege 117 zusammengehaltene mehrlagige Anordnung der Flächenelemente 110 sind bzw. ist vorzugsweise mittels eines generativen Fertigungsverfahrens, insbesondere mittels Lasersintern oder Laserschmelzen, hergestellt. Der Vorteil generativer Fertigungsverfahren liegt darin, dass sich hierdurch Flächenelemente 110 in besonders dünner Ausgestaltung, insbesondere mit einer Dicke von 50 µm bis 100 µm, realisieren lassen. Dies wiederum ermöglicht die Herstellung einer Verbundstruktur mit sehr dünner Gesamtdicke d. Beispielsweise können mittels generativer Fertigungsverfahren Verbundstrukturen mit einer Gesamtdicke von 1 mm oder weniger erzeugt werden.

Die Flächenelemente 110 sind bei der in Fig. 1 dargestellten Ausführungsform einer erfindungsgemäßen Verbundstruktur 100 vollständig in ein Einbettungsmaterial 120 eingebettet.

Das Einbettungsmaterial 120 stellt im Ergebnis eine Einbettungsmatrix für die Flächenelemente 110 dar.

Das Einbettungsmaterial 120 sorgt für den Zusammenhalt sowie für die Flexibilität der Verbundstruktur 100. Obendrein erschwert das Einbettungsmaterial 120 ein vollständiges Durchdringen der Verbundstruktur 100 mit einem spitzen Gegenstand, wie beispielsweise einer Nadel oder einer Spritzenkanüle.

Fig. 2 zeigt schematisch eine Seitenansicht einer Ausführungsform einer Verbundstruktur 100. Die Verbundstruktur 100 unterscheidet sich gegenüber der in Fig. 1 dargestellten Ausführungsform darin, dass die Verbindungselemente 117 zur Erhöhung der Flexibilität der Verbundstruktur 100 durchtrennt wurden, insbesondere mechanisch, beispielsweise mittels Kalandrieren.

Fig. 3 zeigt schematisch eine Draufsicht auf eine weitere Ausführungsform einer nicht erfindungsgemäßen Verbundstruktur 100.

Die dargestellte Verbundstruktur 100 weist drei übereinander angeordnete Lagen 102, 104; 106 von Flächenelementen 110 auf. Die Flächenelemente 110 benachbarter Lagen sind zueinander versetzt angeordnet.

Bei der in Fig. 3 dargestellten Ausführungsform einer Verbundstruktur 100 weisen die Flächenelemente 110 benachbarter Lagen jeweils einen Versatz, insbesondere einen gleich großen Versatz, in Längsrichtung der Flächenelemente 110 (angezeigt durch einen Pfeil mit dem Buchstaben "l") und in Breitenrichtung der Flächenelemente 110 (angezeigt durch einen Pfeil mit dem Buchstaben "b") auf.

Die Flächenelemente 110 bzw. die Lagen 102; 104; 106 der Flächenelemente 110 sind jeweils vollständig in ein Einbettungsmaterial 120 eingebettet.

Bezüglich weiterer Merkmale und Vorteile der Verbundstruktur 100 wird vollständig auf die Beschreibung der in Fig.1 dargestellten Verbundstruktur 100 Bezug genommen. Die dort erläuterten Merkmale und Vorteile gelten sinngemäß auch für die in Fig. 3 dargestellte Verbundstruktur 100.

Die in den Figuren 1 bis 3 dargestellten Verbundstrukturen liegen jeweils bevorzugt in Form einer Stichschutzeinlage vor.

### Herstellung einer Verbundstruktur für den Stichschutz

Zur Herstellung einer Verbundstruktur für den Stichschutz wurde mittels Laserschmelzen eine Anordnung aus Flächenelementen hergestellt, welche anschließend in einen Silikonkautschuk eingebettet wurde.

Die Flächenelemente bestanden aus Stahl und besaßen die folgenden Abmessungen:
Länge x Breite: 2 mm x 2mm; Dicke 0.1 mm.

Die Anordnung der Flächenelemente bestand aus drei Lagen mit einem senkrechten Abstand der Flächenelemente von 0.3 mm von Mitte zur Mitte der Flächenelemente. Die Flächenelemente derselben Lage wiesen einen lichten Abstand von 0.5 mm in x- und y-Richtung auf. Die Flächenelemente der benachbarten Lagen wiesen einen Versatz von 0.75 mm in x-Richtung und 0.75 mm in y-Richtung auf. Die Flächenelemente einer Lage waren jeweils mit einem Flächenelement der benachbarten Lage über einen Steg mit quadratischem Querschnitt und einer Kantenlänge von 0.05 mm verbunden. Außerdem waren die Flächenelemente der obersten Lage über Verbindungsstege mit zwei weiteren benachbarten Flächenelementen der darunter angeordneten Lage verbunden. Die Positionen der Flächenelemente zueinander ist in der Verbundstruktur durch die Anordnung der Stege fixiert. Die Kanten der Flächenelemente und Verbindungsstege wiesen fertigungsbedingte Radien und Oberflächengüten auf.

Die Anordnung aus den Flächenelementen und den Stegen wurde anschließend in einen Silikonkautschuk (Wacker Chemie AG ELASTOSIL LR 3003, Komponente A/B Mischungsverhältnis 1 : 1 und 5 % Vernetzer W, ebenfalls Wacker Chemie AG) durch ein Rakelbeschichtungsverfahren eingebettet. Der Silikonkautschuk wurde ca. 5 Minuten bei 165°C vulkanisiert. Die Einbettung erfolgte so, dass die Struktur von beiden Seiten mit einer Dicke von ca. 0.15 mm durch den Silikonkautschuk abgedeckt war. Dazu wurde zunächst eine Schicht Silikonkautschuk in einer Dicke von 0.15 mm gerakelt, vorvernetzt (ca. 2 Minuten, 100°C), die Struktur eingelegt und dann die Struktur in einem weiteren Strich mit dem Rakelspaltmaß von 1 mm gefüllt und überdeckt.

Die erhaltene Verbundstruktur wies eine Gesamtdicke von ca. 1 mm auf.

## Patentansprüche

1. Verbundstruktur (100) für den Stichschutz, aufweisend
- übereinander angeordnete Lagen (102; 104; 106) von Flächenelementen (110) und ein
- Einbettungsmaterial (120),
wobei bei wenigstens einem Teil der übereinander angeordneten Lagen (102; 104; 106) die Flächenelemente (110) benachbarter Lagen zueinander versetzt angeordnet sind und die Flächenelemente (110) der Verbundstruktur (100) wenigstens teilweise in das Einbettungsmaterial (120) eingebettet sind, **dadurch gekennzeichnet, dass** die Verbundstruktur (100) durchtrennte Verbindungselemente (117) aufweist, wobei die durchtrennten Verbindungselemente (117) vor ihrem Durchtrennen wenigstens einen Teil der Flächenelemente (110) benachbarter Lagen miteinander verbunden haben und deren freien Enden in Richtung Flächenelemente (110) benachbarter Lagen weisen.

2. Verbundstruktur (100) nach Anspruch 1, **dadurch gekennzeichnet, dass** die Flächenelemente (110) jeweils eine größere Länge als Dicke besitzen, wobei die Flächenelemente (110) bevorzugt jeweils eine Länge von 0.25 mm bis 10 mm, insbesondere 0.5 mm bis 5 mm, vorzugsweise 1 mm bis 3 mm, aufweisen.

3. Verbundstruktur (100) nach Anspruch 1 oder 2, **dadurch gekennzeichnet, dass** die Flächenelemente (110) jeweils eine größere Breite als Dicke aufweisen, wobei die Flächenelemente (110) bevorzugt jeweils eine Breite von 0.25 mm bis 10 mm, insbesondere 0.5 mm bis 5 mm, vorzugsweise 1 mm bis 3 mm, aufweisen.

4. Verbundstruktur (100) nach einem der vorhergehenden Ansprüche, **dadurch gekennzeichnet, dass** die Flächenelemente (110) jeweils plättchenförmig, insbesondere quaderförmig, ausgestaltet sind.

5. Verbundstruktur (100) nach einem der vorhergehenden Ansprüche, **dadurch gekennzeichnet, dass** die Flächenelemente (110) benachbarter Lagen jeweils in Längsrichtung und in Breitenrichtung der Flächenelemente (110) zueinander versetzt angeordnet sind, vorzugsweise in Längsrichtung und in Breitenrichtung der Flächenelemente (110) den gleichen Versatz aufweisen.

6. Verbundstruktur (100) nach einem der vorhergehenden Ansprüche, **dadurch gekennzeichnet, dass** die Flächenelemente (110) jeweils aus einem im Vergleich zu dem Einbettungsmaterial (120) härteren Material gebildet sind, wobei die Flächenelemente bevorzugt ein Material aufweisen oder aus einem Material gebildet sind, welches ausgewählt ist aus der Gruppe bestehend aus Metall, Blech, Polymer, insbesondere Kunststoff, Keramikmaterial, Quarz und Kombinationen, insbesondere Verbundmaterialien, aus zwei oder mehreren der genannten Materialien.

7. Verbundstruktur (100) nach einem der vorhergehenden Ansprüche, **dadurch gekennzeichnet, dass** die Flächen der Flächenelemente (110) jeweils flach, d.h. ohne Erhebungen oder Senkungen, und insbesondere gerade ausgeführt sind und/oder die Flächenelemente (110) jeweils eine gleichbleibende, d.h. durchgehend konstante, Dicke aufweisen.

8. Verbundstruktur (100) nach einem der vorhergehenden Ansprüche, **dadurch gekennzeichnet, dass** die Flächenelemente (110) jeweils eine Dicke von 0.025 mm bis 2 mm, insbesondere 0.05 mm bis 1 mm, vorzugsweise 0.1 mm bis 0.5 mm, aufweisen.

9. Verbundstruktur (100) nach einem der vorhergehenden Ansprüche, **dadurch gekennzeichnet, dass** das Einbettungsmaterial (120) ein flexibles, insbesondere elastisches, Einbettungsmaterial ist, wobei das Einbettungsmaterial (120) bevorzugt ein Material aufweist oder aus einem Material gebildet ist, welches ausgewählt ist aus der Gruppe bestehend aus Polysiloxan, insbesondere Polyorganosiloxan, thermoplastisches Elastomer, Kautschuk wie Ethylen-Propylen-Dien-Kautschuk (EPDM), Polyurethan und Kombinationen, insbesondere Blends oder Verbundmaterialien, aus zwei oder mehreren der genannten Materialien.

10. Verbundstruktur (100) nach einem der vorhergehenden Ansprüche, **dadurch gekennzeichnet, dass** die Verbundstruktur (100) eine Gesamtdicke von 0.1 mm bis 6 mm, insbesondere 0.4 mm bis 3 mm, vorzugsweise 0.6 mm bis 1.2 mm, aufweist.

11. Verfahren zur Herstellung einer Verbundstruktur (100) für den Stichschutz, nach einem der vorhergehenden Ansprüche, aufweisend die Schritte:
a) Herstellen von Lagen (102; 104; 106) von Flächenelementen (110),
b) Einbetten der Lagen (102; 104; 106) von Flächenelementen (110) in ein noch nicht verfestigtes Einbettungsmaterial (120) und
c) Verfestigen des Einbettungsmaterials (120), **dadurch gekennzeichnet, dass** beim Schritt a) eine Anordnung aus mehreren übereinander angeordneten Lagen (102; 104; 106) von Flächenelementen (110) hergestellt wird, wobei wenigstens ein Teil der Lagen zueinander versetzt angeordnet ist, zur Herstellung der Anordnung Flächenelemente (110) benachbarter Lagen über Verbindungselemente (117), insbesondere stegförmige Verbindungselemente (117), miteinander verbunden werden, und die Verbindungselemente (117) nach Durchführen von Schritt c) durchtrennt werden.

12. Verfahren nach Anspruch 11, **dadurch gekennzeichnet, dass** der Schritt a) mittels eines generativen Fertigungsverfahrens, insbesondere mittels Lasersintern oder Laserschmelzen, durchgeführt wird.

13. Verfahren nach Anspruch 11 oder 12, **dadurch gekennzeichnet, dass** die Verbindungselemente (117) mechanisch durchtrennt werden, insbesondere mittels Kalandrieren oder Umlenken auf einer Walze.

14. Verfahren nach Anspruch 11, **dadurch gekennzeichnet, dass** beim Schritt a) die Lagen (102; 104; 106) mittels Laser- oder Wasserstrahlschneiden hergestellt werden.

15. Stichschutzeinlage oder Schutztextil, insbesondere Schutzhandschuhe, aufweisend eine Verbundstruktur (100) nach einem der Ansprüche 1 bis 10.

## Claims

1. Composite structure (100) for stab protection, having
- layers (102; 104; 106) of flat elements (110) arranged one above the other and an
- embedding material (120),
the flat elements (110) of adjacent layers being arranged offset relative to one another in at least parts of the layers (102; 104; 106) arranged one above the other, and the flat elements (110) of the composite structure (100) being embedded at least partially into the embedding material (120), **characterized in that** the composite structure (100) has severed connecting elements (117), the severed connecting elements (117) having connected at least some of the flat elements (110) of adjacent layers to one another before being severed and whose free ends face in the direction of flat elements (110) of adjacent layers.

2. Composite structure (100) according to claim 1, **characterized in that** the flat elements (110) each have a greater length than thickness, the flat elements (110) preferably each having a length of 0.25 mm to 10 mm, in particular 0.5 mm to 5 mm, preferably 1 mm to 3 mm.

3. Composite structure (100) according to claim 1 or 2, **characterized in that** the flat elements (110) each have a greater width than thickness, the flat elements (110) preferably each having a width of 0.25 mm to 10 mm, in particular 0.5 mm to 5 mm, preferably 1 mm to 3 mm.

4. Composite structure (100) according to any of the preceding claims, **characterized in that** the flat elements (110) are each designed plate-like, in particular cuboid.

5. Composite structure (100) according to any of the preceding claims, **characterized in that** the flat elements (110) of adjacent layers are each arranged offset to one another in the longitudinal direction and in the width direction of the flat elements (110), and preferably have the same offset in the longitudinal direction and in the width direction of the flat elements (110).

6. Composite structure (100) according to any of the preceding claims, **characterized in that** the flat elements (110) are each formed from a harder material in comparison with the embedding material (120), the flat elements preferably having or being formed from a material selected from the group consisting of metal, sheet metal, polymer, in particular plastic, ceramic material, quartz and combinations, in particular composite materials, of two or more of the said materials.

7. Composite structure (100) according to any of the preceding claims, **characterized in that** the surfaces of the flat elements (110) are each designed flat, i.e. without raised or depressed portions, and in particular straight, and/or the flat elements (110) each have a consistent, i.e. constant thickness throughout.

8. Composite structure (100) according to any of the preceding claims, **characterized in that** the flat elements (110) each have a thickness of 0.025 mm to 2 mm, in particular 0.05 mm to 1 mm, preferably 0.1 mm to 0.5 mm.

9. Composite structure (100) according to any of the preceding claims, **characterized in that** the embedding material (120) is a flexible, in particular elastic embedding material, the embedding material (120) preferably having or being formed from a material selected from the group consisting of polysiloxane, in particular polyorganosiloxane, thermoplastic elastomer, rubber such as ethylene propylene diene monomer (EPDM) rubber, polyurethane and combinations, in particular blends or composite materials, of two or more of the said materials.

10. Composite structure (100) according to any of the preceding claims, **characterized in that** the composite structure (100) has a total thickness of 0.1 mm to 6 mm, in particular 0.4 mm to 3 mm, preferably 0.6 mm to 1.2 mm.

11. Method for manufacturing a composite structure (100) for stab protection according to any of the preceding claims, having the steps:
a) manufacture of layers (102; 104; 106) of flat elements (110),
b) embedding of the layers (102; 104; 106) of flat elements (110) into a not yet solidified embedding material (120) and
c) solidification of the embedding material (120), **characterized in that** in step a) an arrangement of a plurality of layers (102; 104; 106) of flat elements (110) arranged one above the other is manufactured, at least some of the layers being arranged offset to one another; flat elements (110) of adjacent layers are connected to one another by connecting elements (117), in particular web-like connecting elements (117), to manufacture the arrangement; and the connecting elements (117) are severed after performance of step c).

12. Method according to claim 11, **characterized in that** step a) is performed by means of a generative manufacturing method, in particular by means of laser sintering or laser melting.

13. Method according to claim 11 or 12, **characterized in that** the connecting elements (117) are mechanically severed, in particular by means of calendering or deflecting on a roll.

14. Method according to claim 11, **characterized in that** in step a) the layers (102; 104; 106) are manufactured by means of laser cutting or waterjet cutting.

15. Stab protection inlay or protective textile, in particular protective gloves, having a composite structure (100) according to any of claims 1 to 10.

## Revendications

1. Structure composite (100) pour une protection anti-piqûre/anti-couteau, présentant
- des couches superposées (102 ; 104 ; 106) d'éléments plats (110) et
- un matériau d'enrobage (120),
sachant que pour au moins une partie des couches superposées (102 ; 104 ; 106), les éléments plats (110) des couches voisines sont disposés décalés les uns par rapport aux autres et que les éléments plats (110) de la structure composite (100) sont intégrés au moins partiellement dans le matériau d'enrobage (120), **caractérisée en ce que** la structure composite (100) présente des éléments de liaison séparés (117), sachant que les éléments de liaison séparés (117) ont, avant leur séparation, relié entre eux au moins une partie des éléments plats (110) des couches voisines et que leurs extrémités libres pointent vers les éléments plats (110) des couches voisines.

2. Structure composite (100) selon la revendication 1, **caractérisée en ce que** les éléments plats (110) possèdent respectivement une longueur supérieure à leur épaisseur, sachant que les éléments plats (110) présentent de préférence respectivement une longueur comprise entre 0,25 mm et 10 mm, notamment entre 0,5 mm et 5 mm, de préférence entre 1 mm et 3 mm.

3. Structure composite (100) selon la revendication 1 ou 2, **caractérisée en ce que** les éléments plats (110) possèdent respectivement une largeur supérieure à leur épaisseur, sachant que les éléments plats (110) présentent de préférence respectivement une largeur comprise entre 0,25 mm et 10 mm, notamment entre 0,5 mm et 5 mm, de préférence entre 1 mm et 3 mm,

4. Structure composite (100) selon une des revendications précédentes, **caractérisée en ce que** les éléments plats (110) sont conçus sous forme de plaques, notamment de parallélépipèdes.

5. Structure composite (100) selon une des revendications précédentes, **caractérisée en ce que** les éléments plats (110) des couches voisines sont disposés décalés respectivement dans le sens longitudinal et dans le sens de la largeur des éléments plats (110), qu'ils présentent de préférence le même décalage dans le sens longitudinal et le sens de la largeur des éléments plats (110).

6. Structure composite (100) selon une des revendications précédentes, **caractérisée en ce que** chaque élément plat (110) est constitué d'un matériau plus dur que le matériau d'enrobage (120), sachant que les éléments plats présentent de préférence un matériau ou sont constitués d'un matériau qui est sélectionné parmi le groupe comprenant les métaux, tôles, polymères, notamment les plastiques, la céramique, le quartz et des combinaisons, notamment des matériaux composites constitués de deux des matériaux cités ou plus.

7. Structure composite (100) selon une des revendications précédentes, **caractérisée en ce que** les surfaces des éléments plats (110) sont planes, c'est-à-dire sans saillies ou renfoncements et sont notamment rectilignes et/ou que les éléments plats (110) présentent une épaisseur constante, c.-à-d. égale partout.

8. Structure composite (100) selon une des revendications précédentes, **caractérisée en ce que** les éléments plats (110) présentent une épaisseur de 0,025 mm à 2 mm, notamment de 0,05 mm à 1 mm, de préférence de 0,1 mm à 0,5 mm.

9. Structure composite (100) selon une des revendications précédentes, **caractérisée en ce que** le matériau d'enrobage (120) est un matériau souple, notamment élastique, sachant que le matériau d'enrobage (120) présente de préférence un matériau ou est constitué d'un matériau qui est sélectionné parmi le groupe comprenant le polysiloxane, notamment le polyorganosiloxane, les élastomères thermoplastiques, le caoutchouc, tel que le caoutchouc éthylène-propylène-diène (EPDM), le polyuréthane et des combinaisons, notamment des mélanges ou matériaux composites constitués de deux des matériaux cités ou plus.

10. Structure composite (100) selon une des revendications précédentes, **caractérisée en ce que** la structure composite (100) présente une épaisseur totale de 0,1 mm à 6 mm, notamment de 0,4 mm à 3 mm, de préférence de 0,6 mm à 1,2 mm.

11. Procédé de fabrication d'une structure composite (100) pour la protection anti-piqûre/anti-couteau, selon une des revendications précédentes, présentant les étapes suivantes :
a) fabrication de couches (102 ; 104 ; 106) d'éléments plats (110),
b) intégration des couches (102 ; 104 ; 106) d'éléments plats (110) dans un matériau d'enrobage (120) pas encore solidifié et
c) solidification du matériau d'enrobage (120), **caractérisé en ce que** pour l'étape a) un agencement de plusieurs couches superposées (102 ; 104 ;106) d'éléments plats (110) est fabriqué, sachant qu'au moins une partie des couches est disposée de manière décalée, que pour fabriquer l'agencement, des éléments plats (110) des couches voisines sont reliés entre eux au moyen d'éléments de liaison (117), notamment d'éléments de liaison en forme de tiges (117) et que les éléments de liaison (117) sont séparés après réalisation de l'étape c).

12. Procédé selon la revendication 11, **caractérisé en ce que** l'étape a) est réalisée au moyen d'un procédé de fabrication génératif, notamment par frittage laser ou fusion laser.

13. Procédé selon la revendication 11 ou 12, **caractérisé en ce que** les éléments de liaison (117) sont séparés mécaniquement, notamment par calandrage ou enroulement sur un rouleau.

14. Procédé selon la revendication 11, **caractérisé en ce que** lors de l'étape a), les couches (102 ; 104 ; 106) sont fabriquées par découpage au laser ou au jet d'eau.

15. Garniture anti-piqûre/anti-couteau ou textile de protection, notamment gants de protection, présentant une structure composite (100) selon une des revendications 1 à 10.
